# EUROPEAN PATENT SPECIFICATION

(11) **EP 2 033 808 B1**
(45) Date of publication and mention of the grant of the patent: **27.02.2013**
(21) Application number: 08252687.2
(22) Date of filing: 13.08.2008
(51) Int. Cl.: B60B 15/28

(54) **Wheel weights**
Radgewichte
Contrepoids de roue

(30) Priority: 07.09.2007 GB 0717367
(43) Date of publication of application: 11.03.2009
(73) Proprietor: AGCO SA, 60026 Beauvais (FR)
(72) Inventor: Dhordain, Johnny, 60155 Rainvilliers (FR); Husson, Geoffrey, 54134 Ceintrey (FR); Deman, Cedric, 60650 Savignies (FR)
(74) Representative: Morrall, Roger

(56) References cited:
- DE-B- 1 279 496
- NL-A- 7 503 879
- US-A- 2 150 107
- US-A- 2 859 065
- US-B1- 6 283 556

## Description

This invention relates to wheel weights and in particular to such weights used in agricultural tractors or similar vehicles. Such wheel weights are known from US 2 859 065 A that forms the closest prior art according to the preamble of claim 1.

There is a requirement to provide a system of wheel weights which is economical to produce, is easy to attach and which allows good flexibility for varying the attached weight over a wide range. Also the weights should not affect the attachment or detachment of the associated vehicle wheel.

Thus in accordance with the present invention there is provided a wheel weight system for attachment to the disc of a tractor or other vehicle wheel comprising an annular axially inner weight for attachment to one side of the wheel disc via a first set of bolts extending axial through the inner weight and the wheel disc, an axially outer weight for the attachment to the axially inner weight by a second set of bolts which extend through the axially outer weight into the axially inner weight, and a set of centring members which cooperate with apertures in the axially inner and outer weights to centre the axially outer weight relative to the axially inner weight.

The centring members may be cylindrical at one end and conical at the other end, the cylindrical ends of the centring members being received in corresponding recesses in the axially outwardly facing sides of the inner weights and the conical ends being received in corresponding conical recesses in the axially inwardly facing sides of the outer weights.

The axially outwardly facing sides of the outer weight may also have cylindrical recesses to receive the cylindrical ends of additional centring members to allow a further outer weight to attached to outer weight.

Each outer weight is preferably secured to its adjacent inner or adjacent outer weight by the second set of bolts which extend through holes in the bases of the cylindrical recesses in the axially outwardly facing side of each outer weight.

The cylindrical end portion of each centring member is preferably recessed to be placed over a head of one of the second set of bolts in the associated cylindrical recess.

The axially outwardly facing side of each outer weight is preferably provided with threaded holes which extend into the bases of the conical recesses formed in the axially inwardly facing side of each outer weight, the threaded holes being engaged by a third set of bolts securing a further outer weight in position.

The first set of bolts preferably holds an inner weight on both sides of the wheel disc to also allow outer weights to be secured on both sides of the wheel disc.

The outer periphery of the or each outer weight is preferably scalloped to clear a tyre inflation valve of the wheel when the second weight secured in each possible rotation position relative to the wheel disc.

One embodiment of the present invention will now be described, by way of example only, with reference to the accompanying drawings in which:-
Figure 1 shows diagrammatically a section through a tractor wheel provided with a wheel weight system in accordance with the present invention;
Figure 2 shows a perspective view of an inner weight used in the system of Figure 1;
Figure 3 shows a side view in the direction of the arrow X of Figure 2;
Figure 4 shows a section on the plane A-A of Figure 1;
Figure 5 shows a section on the line B-B of Figure 3;

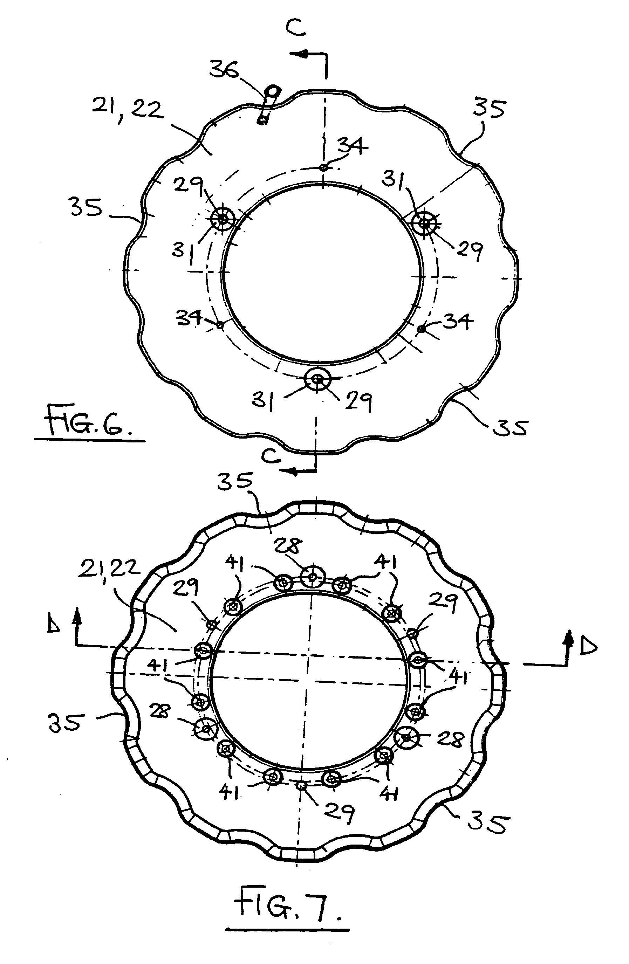

Figure 6 shows an outer side view of an outer weight member used in the system of Figure 1;
Figure 7 shows an inner side view of the outer weight of Figure 6;

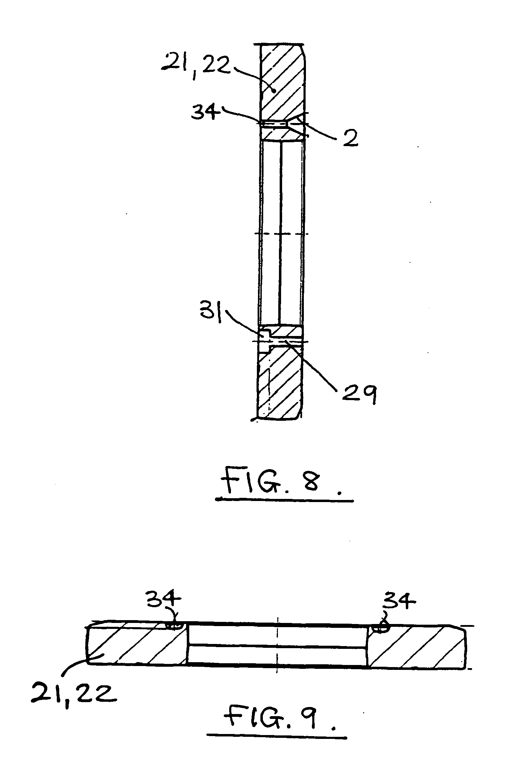

Figure 8 shows a section on the line C-C of Figure 6;
Figure 9 shows a section on the line D-D of Figure 7, and
Figures 10 and 11 shows perspective and sectional views respectively of a centring member used in the system of Figure 1.

Referring to the drawings, a tractor wheel 10 has a disc 11 through which the wheel is secured using conventional fastening bolts (not shown) to associated wheel hub (also not shown).

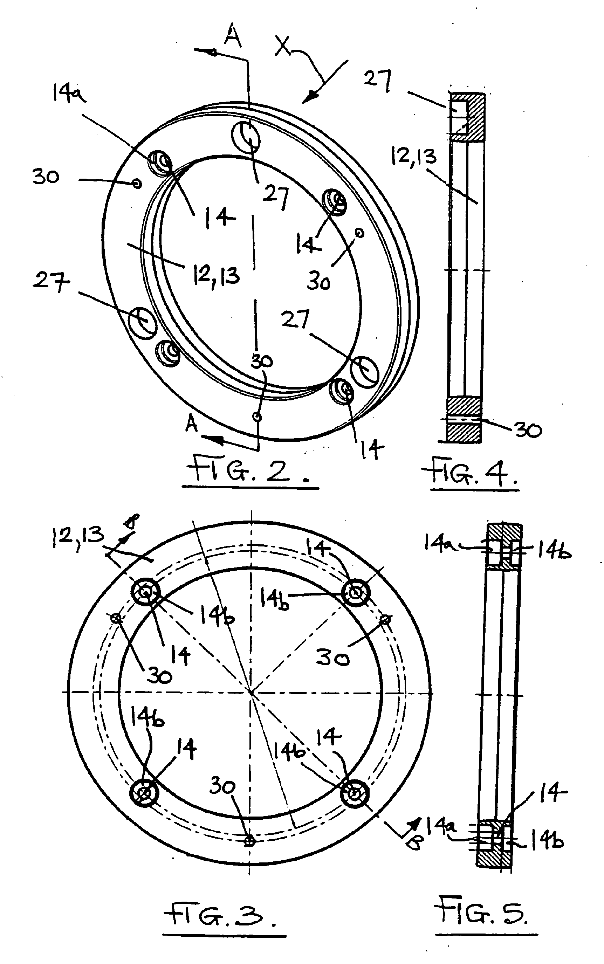

In accordance with the present invention, mounted on either side of the wheel disc 11 outside the wheel fastening bolts are annular inner weights 12 and 13 which are shown in more detail in figures 2 to 5. Both these weights are of identical form and referring to weight 12 this has four bolt mounting holes 14 which emerge through the sides of the inner weight 12 via recesses 14a and 14b respectively. The inner weights 12 and 13 are secured on either side of the disc 11 by a first set of four mounting bolts 15. A first washer 16 is provided under each head 15a of bolt 15. Bolt 15 extends through inner weight 12 and is secured to disc 11 using washer 17 and first nut 18. Bolt head 15a and washer 16 are received in recess 14a. Bolt 15 also extends through weight 13 and weight 13 is secured to wheel disc 11 by a further nut 19 and washer 20 which are located in recess 14a of weight 13. As will be appreciated, the washer 17 and nut 18 are located in the recess 14b of weight 13.

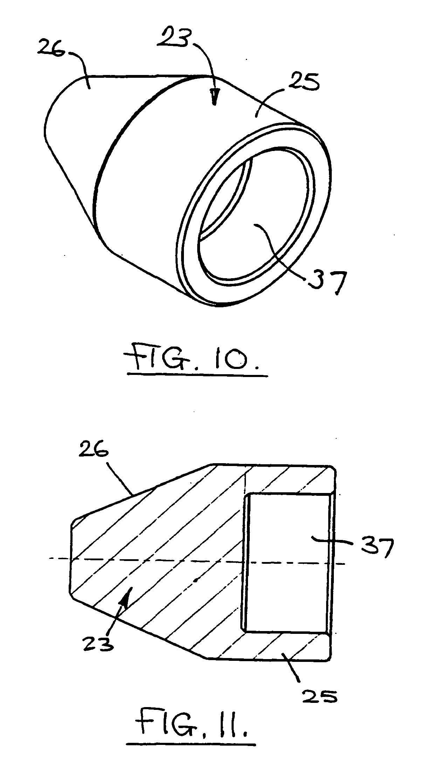

Outer weights 21 and 22 are each supported on inner weights 12 and 13 by three centring members 23 (see Figures 10 and 11). The outer weights are of identical construction and are each secured to their associated inner weight by a second set of three mounting bolts 24 which extend through plain holes 29 in weights 21 and 22 and which engage three screw-threaded holes 30 formed in the inner weights 12 and 13. Holes 29 are recessed at 31 to receive the heads 24a of bolts 24. These recesses 31 also house the cylindrical portion 25 of any centring member which may be used to secure a further outer weight in position.

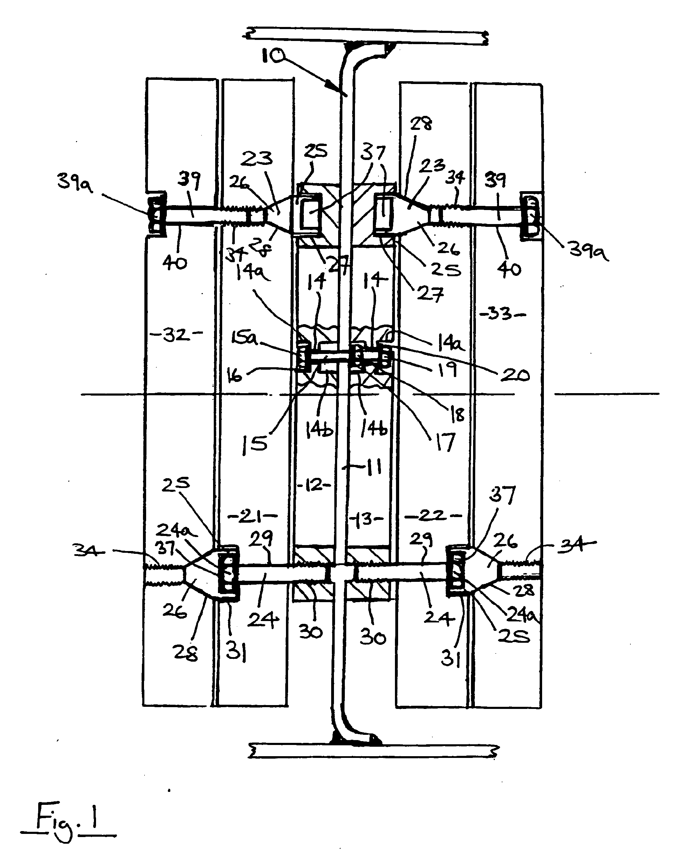

Figures 10 and 11 show details of the centring members 23 which each have a cylindrical end portion 25 and a conical end portion 26. The cylindrical end portions 25 are received in cylindrical recesses 27 in the axially outer facing surfaces of the inner wheel weights 12 and 13 or the recesses 31 of outer weights 21 and 22. The conical end portions 26 of the centring members 23 are also received in the conical recesses 28 formed in the axially inner surfaces of the outer weight 21 and 22. The cylindrical end portions 25 of centring members 23 are provided with recesses 37 which are placed over the bolt heads 24a (or 39a) as shown in Figure 1.

A third set of bolts 39 extend through plain holes 40 in additional outer weight 32 and 33 to engaged screwed threaded holes 34 in the inner weights 21 and 22 which enter into the conical recesses 28 in these weights.

Thus using the combination of the centring members 23 and the second sets of mounting bolts 24 and 39 the first outer weights 21 and 22 and second outer weights 32 and 33 are securely fastened and centred relative to the inner weights 12 and 13. Further sets of outer weights can be attached to weights 32 and 33 using screw threaded holes 34 in weights 32 and 33 in a similar manner.

The inner faces of the outer weights 21,22;32,33 are provided with additional recesses 41 which provide, further clearance for any protruding bolts 15.

The outer periphery of each outer weight is of scalloped form with the scallops 35 providing clearance for any tyre inflation valve 36 no matter in which circumferential position the outer weight is secured to disc 11.

The present invention thus provides a wheel weight system which is economical to provide since apart from the fastening bolts and nuts there are only three other components: the inner weights, the outer weights and the centring members. Also weights can conveniently be secured on both sides of the wheel disc.

Typically the inner weights will weigh 37 kilos each and the outer weights 250 kilos each so the system allows a good range of adjustment of weight. Also, since the weight fastening bolts are all located radially outward of the fastening bolts which secure the wheel to its hub, the wheel can be easily attached or removed from the hub without the need to touch the wheel weight attachment bolts.

## Claims

1. A wheel weight system for attachment to the disc (11) of a tractor or other vehicle wheel (10) **characterised in that** it comprises:
- an annular axially inner weight (12) for attachment to one side of the wheel disc via a first set of bolts (15) extending axial through the inner weight and the wheel disc,
- an axially outer weight (21) for the attachment to the axially inner weight by a second set of bolts (24) which extend through the axially outer weight into the axially inner weight, and
- a set of removable centring members (23) which cooperate with apertures (27,28) in the axially inner and outer weights to centre the axially outer weight relative to the axially inner weight.

2. A system according to Claim 1, in which the centring members are cylindrical at one end (25) and conical at the other end (26), the cylindrical ends of the centring members being received in corresponding recesses in the axially outwardly facing sides of the inner weights and the conical ends being received in corresponding conical recesses in the axially inwardly facing sides of the outer weights.

3. A system according to Claim 2, in which the axially outwardly facing sides of the outer weight (21) also has cylindrical recesses (31) to receive the cylindrical ends of additional centring members to allow a further outer weight (32) to be attached to the first outer weight.

4. A system according to any one of Claims 1 to 3, in which each outer weight is secured to its adjacent inner weight by the second set of bolts (24) which extend through holes (29) in the bases of cylindrical recesses (31) in the axially outwardly facing side of each outer weight.

5. A system according to Claim 4, in which the cylindrical end portion (25) of each centring member is recessed (37) to be placed over a head (24a) of one of the second set of bolts (24) in the associated cylindrical recess (31).

6. A system according to Claim 4 or 5, in which the axially outwardly facing side of each outer weight is provided with threaded holes (34) which extend into the bases of the conical recesses (28) formed in the axially inwardly facing side of each outer weight, the threaded holes being engaged by a third set of bolts (39) securing a further outer weight (32) in position.

7. A system according to any one of Claims 1 to 6, in which there are three centring members (23) equally spaced around the inner and outer weights.

8. A system according to any one of Claims 1 to 7, in which there are four bolts in the first set of bolts.

9. A system according to any one of Claims 1 to 8, in which there are three bolts in the second or subsequent set of bolts.

10. A system according to any one of Claims 1 to 9, in which the first set of bolts holds an inner weight (12,13) on both sides of the wheel disc to also allow outer weights (21,22) to be secured on both sides of the wheel disc.

11. A system according to any one of Claims 1 to 10, in which the outer periphery of the or each outer weight (21,22,32,33) is scalloped (35) to clear a tyre inflation valve (36) of the wheel when the second weight secured in each possible rotation position relative to the wheel disc.

12. A system according to any on of Claims 1 to 11, in which the or each inner weight (12,13) is recessed (14b) around holes (14) through which the first set of bolts (15) extend to accommodate fastening nuts (18) used to secure the first weight (12) to the wheel disc.

13. A system according to any one of Claims 1 to 12, in which the or each inner weight has threaded holes (30) for engagement by the second set of bolts.

## Patentansprüche

1. Radgewichts-System, welches bestimmt ist für eine Befestigung an der Radscheibe (11) eines Traktors oder Zugfahrzeugs oder eines Rades (10) eines anderen Fahrzeugs, **dadurch gekennzeichnet, dass** dieses aufweist:
- ein ringförmiges axial inneres Gewicht (12), welches für eine Befestigung an einer Seite der Radscheibe über einen ersten Satz Bolzen (15), die sich axial durch das innere Gewicht und die Radscheibe erstrecken, bestimmt ist,
- ein axial äußeres Gewicht (21), welches bestimmt ist für eine Befestigung an dem axial inneren Gewicht durch einen zweiten Satz Bolzen (24), die sich durch das axial äußere Gewicht in das axial innere Gewicht erstrecken, und
- einen Satz lösbarer oder entfernbarer Zentrierelemente (23), die mit Öffnungen (27, 28) in dem inneren Gewicht und dem äußeren Gewicht zusammenwirken zum Zentrieren des axial äußeren Gewichts gegenüber dem axial inneren Gewicht.

2. System nach Anspruch 1, wobei die zentrierenden Elemente an einem Ende (25) zylindrisch sowie an dem anderen Ende (26) konisch ausgebildet sind, wobei die zylindrischen Enden der zentrierenden Elemente in korrespondierenden Ausnehmungen in den axial auswärts weisenden Seiten der inneren Gewichte und die konischen Enden in korrespondierenden konischen Ausnehmungen in den axial nach innen weisenden Seiten der äußeren Gewichte aufgenommen sind.

3. System nach Anspruch 2, **dadurch gekennzeichnet, dass** die axial auswärts weisenden Seiten des äußeren Gewichts (21) auch zylindrische Ausnehmungen (31) besitzen zur Aufnahme von zylindrischen Enden von zusätzlichen zentrierenden Elementen, um zu ermöglichen, dass ein weiteres äußeres Gewicht (32) an dem ersten äußeren Gewicht befestigt werden kann.

4. System nach einem der Ansprüche 1 bis 3, **dadurch gekennzeichnet, dass** jedes äußere Gewicht an seinem benachbarten inneren Gewicht durch einen zweiten Satz Bolzen (24) befestigt oder gesichert ist, die sich durch Löcher (29) in der Basis der zylindrischen Ausnehmungen (31) in der axial auswärts weisenden Seite von jedem äußeren Gewicht erstrecken.

5. System nach Anspruch 4, **dadurch gekennzeichnet, dass** der zylindrische Endbereich (25) jedes zentrierenden Elements mit einer Ausnehmung (37) ausgestattet ist, um eine Anordnung über einem Kopf (24a) eines Bolzens des zweiten Satzes Bolzen (24) in der zugeordneten zylindrischen Ausnehmung (31) zu ermöglichen.

6. System nach Anspruch 4 oder 5, **dadurch gekennzeichnet, dass** die axial auswärts weisende Seite jedes äußeren Gewichts mit Gewindebohrungen (34) ausgestattet ist, die sich in die Basis der konischen Ausnehmungen (28), die in der axial nach innen weisenden Seite von jedem äußeren Gewicht gebildet sind, erstrecken, wobei die Gewindebohrungen mit einem dritten Satz Bolzen (39) in Eingriff stehen, die ein weiteres äußeres Gewicht (32) in Position halten oder sichern.

7. System nach einem der Ansprüche 1 bis 6, **dadurch gekennzeichnet, dass** es drei zentrierende Elemente (23) gibt, die gleichmäßig um das innere Gewicht und das äußere Gewicht beabstandet oder verteilt sind.

8. System nach einem der Ansprüche 1 bis 7, **dadurch gekennzeichnet, dass** es in dem ersten Satz Bolzen vier Bolzen gibt.

9. System nach einem der Ansprüche 1 bis 8, **dadurch gekennzeichnet, dass** es in dem zweiten oder folgenden Satz Bolzen drei Bolzen gibt.

10. System nach einem der Ansprüche 1 bis 9, **dadurch gekennzeichnet, dass** der erste Satz Bolzen auf beiden Seiten der Radscheibe ein inneres Gewicht (12, 13) hält, um auch zu ermöglichen, dass äußere Gewichte (21, 22) an beiden Seiten der Radscheibe befestigt oder gesichert werden.

11. System nach einem der Ansprüche 1 bis 10, **dadurch gekennzeichnet, dass** der äußere Umfang des oder jedes äußeren Gewichts (21, 22, 32, 33) mäanderförmig, bogenförmig, gekräuselt oder zahnartig (35) ausgebildet ist zwecks Freilassung eines Aufblasventils (36) des Rads, wenn das zweite Gewicht in jeder möglichen Drehposition relativ zu der Radscheibe befestigt oder gesichert ist.

12. System nach einem der Ansprüche 1 bis 11, **dadurch gekennzeichnet, dass** das oder jedes innere Gewicht (12, 13) mit einer Ausnehmung (14b) um Löcher oder Bohrungen (14) ausgestattet ist, durch die sich der erste Satz Bolzen (15) erstreckt zur Aufnahme von Befestigungsmuttern (18), die verwendet werden, um das erste Gewicht (12) an der Radscheibe zu sichern oder zu befestigen.

13. System nach einem der Ansprüche 1 bis 12, **dadurch gekennzeichnet, dass** das oder jedes innere Gewicht Gewindebohrungen (30) besitzt, die für einen Eingriff des zweiten Satzes Bolzen bestimmt sind.

## Revendications

1. Dispositif formant contrepoids de roue destiné à être fixé sur un disque (11) d'un tracteur ou autre roue de véhicule (10) **caractérisé en ce qu'**il comprend :
un poids annulaire axialement interne (12) destiné à être fixé sur un côté du disque de roue par l'intermédiaire d'un premier jeu de boulons (15) s'étendant axialement à travers le poids interne et le disque de roue,
un poids axialement externe (21) destiné à être fixé sur le poids axialement interne par un deuxième jeu de boulons (24) qui s'étendent à travers le poids axialement externe vers le poids axialement interne, et
un jeu d'éléments de centrage amovible (23) qui coopèrent avec les ouvertures (27, 28) sur les poids axialement interne et externe de manière à centrer le poids axialement externe par rapport au poids axialement interne.

2. Dispositif selon la revendication 1, dans lequel les éléments de centrage sont cylindriques à une extrémité (25) et coniques à l'autre extrémité (26), les extrémités cylindriques des éléments de centrage étant reçues dans des cavités correspondantes sur les côtés orientés axialement vers l'extérieur des poids internes et les extrémités coniques étant reçues dans des cavités coniques correspondantes sur les côtés orientés axialement vers l'intérieur des poids externes.

3. Dispositif selon la revendication 2, dans lequel les côtés orientés axialement vers l'extérieur du poids externe (21) comportent aussi des cavités cylindriques (31) destinées recevoir les extrémités cylindriques d'éléments de centrage supplémentaires afin de permettre la fixation d'un autre poids externe (32) sur le premier poids externe.

4. Dispositif selon l'une quelconque des revendications 1 à 3, dans lequel chaque poids externe est fixé sur son poids interne adjacent par le deuxième jeu de boulons (24) qui s'étendent à travers les orifices (29) sur les bases des cavités cylindriques (31) du côté orienté axialement vers l'extérieur de chaque poids externe.

5. Dispositif selon la revendication 4, dans lequel la partie d'extrémité cylindrique (25) de chaque élément de centrage est creusée (37) de manière à être placée au-dessus d'une tête (24a) de l'un des boulons du deuxième jeu de boulons (24) sur la cavité cylindrique associée (31).

6. Dispositif selon la revendication 4 ou 5, dans lequel le côté orienté axialement vers l'extérieur de chaque poids externe comporte des orifices filetés (34) qui s'étendent dans les bases des cavités coniques (28) formées sur le côté orienté axialement vers l'intérieur de chaque poids externe, les orifices filetés étant couplés à un troisième jeu de boulons (39) fixant en position un autre poids externe (32).

7. Dispositif selon l'une quelconque des revendications 1 à 6, dans lequel trois éléments de centrage (23) sont régulièrement espacés par rapport aux poids interne et externe.

8. Dispositif selon l'une quelconque des revendications 1 à 7, dans lequel le premier jeu de boulons comporte quatre boulons.

9. Dispositif selon l'une quelconque des revendications 1 à 8, dans lequel le deuxième jeu ou les jeux de boulons supplémentaires comportent trois boulons.

10. Dispositif selon l'une quelconque de revendications 1 à 9, dans lequel le premier jeu de boulons maintient un poids interne (12, 13) des deux côtés du disque de roue afin de permettre aussi la fixation de poids externes (21, 22) des deux côtés du disque de roue.

11. Dispositif selon l'une quelconque des revendications 1 à 10, dans lequel la périphérie externe du ou de chaque poids externe (21, 22, 32, 33) est crantée (35) afin de masquer une valve de gonflage de pneu (36) de la roue lorsque le second poids est fixé à chaque position angulaire possible par rapport au disque de roue.

12. Dispositif selon l'une quelconque des revendications 1 à 11, dans lequel le ou chaque poids interne (12, 13) est creusé (14b) autour d'orifices (14) à travers lesquels le premier jeu de boulons (15) s'étend afin de recevoir les écrous de fixation (18) utilisés de manière à fixer le premier poids (12) sur le disque de roue.

13. Dispositif selon l'une quelconque des revendications 1 à 12, dans lequel le ou chaque poids interne comporte des orifices filetés (30) destinés à recevoir le deuxième jeu de boulons.
